**Europäisches Patentamt**

**European Patent Office**

**Office européen des brevets**

(19)

(11) Veröffentlichungsnummer: **0 156 037**
**A2**

(12) # EUROPÄISCHE PATENTANMELDUNG

(21) Anmeldenummer: **84116439.5**

(22) Anmeldetag: **28.12.84**

(51) Int. Cl.⁴: **E 04 F 21/00**

(30) Priorität: **31.12.83 DE 3347699**

(43) Veröffentlichungstag der Anmeldung:
**02.10.85 Patentblatt 85/40**

(84) Benannte Vertragsstaaten:
**AT BE CH FR GB IT LI NL SE**

(71) Anmelder: **GFA Dichtungstechnik Joachim Hagemeier GmbH**
**Grusonstrasse 22**
**D-2000 Hamburg 74(DE)**

(72) Erfinder: **Gebert, Georg**
**Amselstieg 5b**
**D-2105 Seevetal(DE)**

(74) Vertreter: **Schmidt-Bogatzky, Jürgen, Dr. Ing.**
**Schlossmühlendamm 4**
**D-2100 Hamburg 90(DE)**

(54) **Verfahren zur Herstellung von einstückigen Dichtungsrahmen und Vorrichtung zur Durchführung des Verfahrens.**

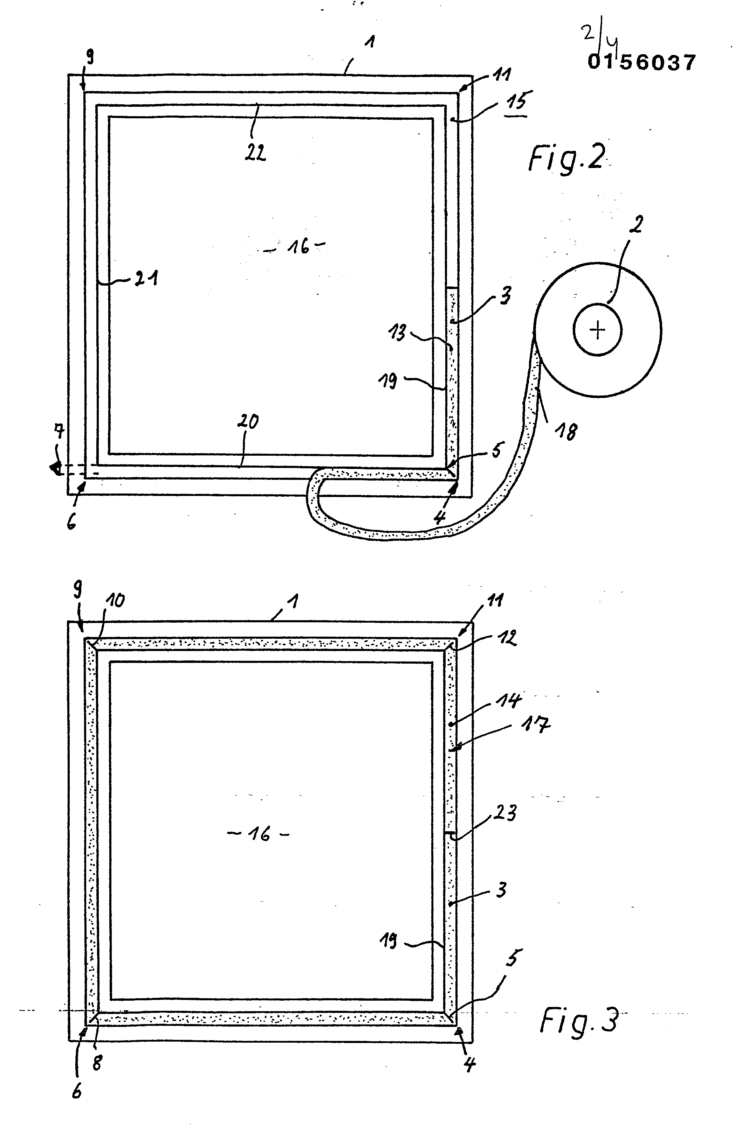

(57) Die Erfindung betrifft ein Verfahren zur Herstellung von einstückigen Dichtungsrahmen 17 für Fenster, Türen od. dgl. aus einem elastischen gummiartigen im Querschnitt profilierten strangartigen Dichtungsprofil 18 und eine Vorrichtung zur Durchführung des Verfahrens. Von einer Rolle eines Dichtungsprofils 18 wird der äußere Abschnitt des freien Endes in einen Teil eines Nutabschnitts der umlaufenden Nut 15 des Rahmens oder Flügels eingelegt, dann im Bereich der einen Ecke der Nut in dem Dichtungsprofil ohne dieses zu durchtrennen ein Gehrungsschnitt ausgebildet. Die Schnittseiten werden dann miteinander verbunden. Danach wird das Dichtungsprofil 18 in sich wiederholender Folge in den jeweils folgenden Nutabschnitt eingelegt und in dem Eckbereich nach Durchführung eines Gehrungsschnitts ohne Durchtrennung des Dichtungsprofils miteinander verklebt. Nach Verfüllen der Nut 15 mit dem Dichtungprofil 18 wird dieses durchtrennt und der freie Endabschnitt 14 mit dem bereits in dem Nutabschnitt 19 befindlichen Endabschnitt des Dichtungsprofils 18 durch Kleben verbunden (Figur 3).

./...

Croydon Printing Company Ltd.

Fig.3

Die Erfindung betrifft ein Verfahren zur Herstellung von einstückigen Dichtungsrahmen für Fenster, Türen od. dgl. aus einem elastischen gummiartigen im Querschnitt profilierten strangartigen Dichtungsprofil und eine Vorrichtung zur Durchführung des Verfahrens.

Die Herstellung derartiger Dichtungsrahmen erfolgt üblicherweise so, daß für die einzelnen Rahmenabschnitte Dichtungsstreifen aus Stangenmaterial zugeschnitten und dann in den Eckbereichen miteinander verbunden werden. Als zweckmäßig hat es sich hierbei erwiesen, an den Eckabschnitten der Dichtungsstreifen Gehrungsschnitte auszubilden und diese mittels eines Klebers oder durch Schweißen miteinander zu verbinden. Bisher erfolgt der Arbeitsvorgang der Dichtungsrahmenfertigung getrennt vom Ausrüsten eines z. B. Fensterflügels mit Beschlägen und Glas, wobei insgesamt zehn Arbeitsvorgänge erforderlich sind:

- der Fensterflügel muß zusätzlich herangeschafft werden

- das Längenmaß für die einzelnen Dichtungsschenkel muß vom Beschlagfalz des Flügels abgenommen werden

- die einzelnen Längen müssen separat entweder mechanisch oder thermisch geschnitten werden

- dem Schneiden folgt der Schweißvorgang

- die beim Schweißen im Nahtbereich entstehende Schweißwulst muß durch Putzen entfernt werden

- der fertige Rahmen wird gebündelt

- der fertige Rahmen wird etikettiert

- der fertige Rahmen wird gelagert bis zum Einbau

- zu einem späteren Zeitpunkt wird der Rahmen wieder herbeigeholt

- der Rahmen wird dann eingebaut.

Diese hohe Anzahl erforderliche Arbeitsvorgänge verteuert die Herstellung von Fensterflügeln erheblich. Darüber hinaus ist die Herstellung dieser Dichtungsrahmen wegen der verschiedenen ein genaues Messen voraussetzenden Schnittvorgänge relativ arbeitsaufwendig. Ein weiterer Nachteil besteht darin, daß die so vorgefertigten Dichtungsrahmen anschließend noch in die entsprechenden Nuten der Rahmen oder Flügel von Türen bzw. Fenstern eingelegt werden müssen.

Die Aufgabe der Erfindung besteht darin, ein Verfahren aufzuzeigen, nach dem es möglich ist, Dichtungsrahmen herzustellen, bei denen nicht besondere Rahmenabschnitte erst zugeschnitten und miteinander verbunden werden müssen und die gegebenenfalls bei der Herstellung gleichzeitig in die Nuten des Rahmens oder Flügels der Tür bzw. des Fensters eingelegt werden können. Ein weiteres Ziel der Erfindung ist die Schaffung einer Vorrichtung, mittels derer nach dem Verfahren technisch einwandfreie Eckverbindungen wirtschaftlich hergestellt werden können.

Erfindungsgemäß erfolgt die Lösung der Aufgabe dadurch, daß von einer Rolle eines Dichtungsprofils der äußere Abschnitt des freien Endes in einen Teil eines ersten Nutabschnitts der umlaufenden Nut des Rahmens oder Flügels eingelegt, dann im Bereich der einen Ecke das Dichtungsprofil ohne dieses zu durchtrennen ein Gehrungsschnitt ausgebildet und die Schnittflächen miteinander verklebt werden, dann das Dichtungsprofil in sich wiederholender Folge in den jeweils folgenden Nutabschnitt eingelegt und an den Eckbereichen nach Gehrungsschnitten ohne Durchtrennung des Dichtungsprofils miteinander verklebt und nach Verfüllen der Nut das Dichtungsprofil durchtrennt und der freie Endabschnitt mit dem bereits in dem ersten Nutabschnitt befindlichen Endabschnitt des Dichtungsprofils durch Kleben verbunden wird.

Nach einem weiteren Merkmal der Erfindung besteht die Vorrichtung zur Durchführung des Verfahrens aus einer an einem Rahmen eines Fenster-oder Türflügels festklemmbaren Grundplatte, auf der ein Profilstück zur Lagerung des Dichtungsprofils und eine dem Profilstück zugeordnete Schneideinheit angeordnet ist, mittels derer ein Gehrungsschnitt ausbildbar ist.

Nach der Erfindung wird die Rahmenfertigung in die Arbeitsvorgänge "Beschläge anschlagen" und "Verglasen" integriert, so daß das separate Herbeischaffen des Fensterflügels als Arbeitsvorgang entfällt. Auf das Messen der Länge kann verzichtet werden, weil es sich durch den vorgezogenen Einbau des Dichtungsprofils erübrigt. Der Schweißvorgang wird ersetzt durch das Arbeiten mit dem schnellabbindenden Kleber, was eine erhebliche Zeitersparnis erwirkt. Durch das Klebeverfahren entsteht keine Schweißwulst mehr, so daß ein Putzen nicht erforderlich ist. Ferner entfallen die Arbeitsvorgänge des Bündelns, Etikettierens, Aufbewahrens und der Wiederherbeischaffung dadurch, daß der Rahmen mit seiner Vollendung bereits eingebaut ist. Somit werden von bisher üblichen zehn Arbeitsvorgängen durch Anwendung der Erfindung sieben eingespart. Dies bedeutet aber auch, daß im Gegensatz zu bekannten Herstellungsverfahren weit mehr als zwei Drittel des bisher erforderlichen Zeitaufwandes durch das Integrieren der Rahmenanfertigung in die konventionellen Arbeitsvorgänge des Anschlagens und des Verglasens eingespart wird.

Weitere Merkmale der Erfindung werden in den Unteransprüchen beschrieben und nachstehend an Hand der in den Zeichnungen dargestellten Ausführungsbeispiele näher erläutert. Es zeigt

Fig. 1 eine schematische Darstellung der Dichtungsrahmenherstellung nach der Erfindung in der Draufsicht

Fig. 2 das Einlegen eines Dichtungsprofils in einen Fensterrahmen

Fig. 3 den Fensterrahmen nach Fig. 2 mit fertigem Dichtungsrahmen

Fig. 4 Ausführungsformen der Vorrichtung zur Herstelund 5 lung von Dichtungsrahmen in schematischen Seitenansichten

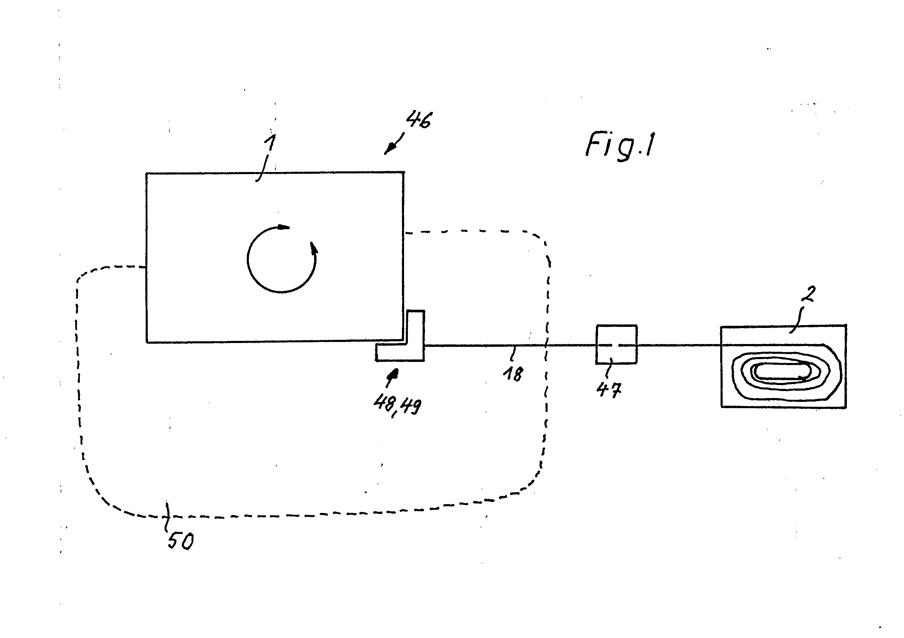

Zur Fertigung eines Dichtungsrahmens 17 in einem Rahmen 1 eines Fenster- oder Türflügels wird dieser zweckmäßigerweise auf einem Drehtisch 46 gelagert. Die Vorrichtung 48, 49 kann dann ortsfest angeordnet werden, wobei sie stets an einem der Eckabschnitte des Rahmens 1 angesetzt werden kann. Hierdurch wird der erforderliche Arbeitsraum 50 relativ klein gehalten. Die Vorrichtung 48, 49 zieht das erforderliche Dichtungsprofil 18 von einer Dichtungsprofilrolle 2, die auf einer Palette mit Abrollvorrichtung befindlich sein kann. Endabschnitte der Dichtungsprofile 18 von verschiedenen Dichtungsprofilrollen 2 können mittels einer Verbindungsvorrichtung 47 verbunden werden (Fig. 1).

Die Herstellung des Dichtungsrahmens geschieht wie folgt: Ein z. B. Holzfensterflügel - gerade ausgerüstet mit Beschlägen, Glas und anderem Zubehör - wird auf den Drehtisch 46 gelegt. Ein weiches elastisches Dichtungsprofil 18 wird dann folgendermaßen eingebaut. Das Ende des Dichtungsprofils 18 - mit stumpfen Schnitt versehen -wird in die dafür vorgesehene Nut eingedrückt. Der Anfang liegt in der Mitte des oberen waagerechten Schenkels. Der Einbau erfolgt in dieser Weise erst einmal bis zur ersten Fensterecke. Dort wird die Vorrichtung 48, 49 aufgesetzt, das Dichtungsprofil 18 sauber auf Gehrung geschnitten, ohne es ganz zu durchtrennen. Die Vorrichtung 48, 49 wird zur nächsten Ecke geführt und aufgesetzt, das zuvor auf Gehrung geschnittene Dichtungsprofil wird paßgenau im Eckbereich eingedrückt. Die beiden Schnittflächen werden mit dem Schnellkleber benetzt und aneinander zur Anlage gebracht, so daß damit eine absolut saubere Eckverbindung ohne jeden weiteren Arbeitsvorgang erzielt wird. Anschließend wird die nächste Gehrung geschnitten. Die zuvor geschilderten Arbeitsvorgänge wiederholen sich bis zur Komplettierung des Fensterflügels. Nach Vollendung der letzten Eckverbindung wird das Dichtungsprofil 18 bis an den Anfang des Strangs in der bereits geschilderten Form eingebaut, stumpf abgeschnitten und ebenfalls verklebt. Dadurch wird aus Meterware ein kompletter in sich abgeschlossener Dichtungsrahmen 17 hergestellt.

Eine mögliche Ausführung eines Dichtungsrahmens 17 in einem Fensterrahmen ist in den Fig. 2 und 3 dargestellt. Der Rahmen 1 weist in bekannter Weise eine mittige Glasfüllung 16 und eine umlaufende Nut 15 für einen Dichtungsrahmen 17 auf. Der Dichtungsrahmen 17 wird durch entsprechendes Verbinden von Teilabschnitten eines von einer Dichtungsprofilrolle 2 abziehbaren Dichtungsprofils 18 hergestellt. Der freie Endabschnitt 3 des Dichtungsprofils 18 wird etwa mittig in den Nutabschnitt 19 der Nut 15 eingelegt. An der Ecke 4 wird ein Gehrungsschnitt in dem Dichtungsprofil 18 so ausgebildet, daß dieses nicht durchtrennt wird. Die Schnittflächen dieses Gehrungsschnitts 5 werden durch einen extrem schnell abbindenden Kleber wie z. B. einen Cyanolit-Kleber miteinander verbunden. Danach wird der Eckabschnitt in die Nut 15 eingelegt und der Nutabschnitt 20 mit ca. 20 mm mit dem Dichtungsprofil 18 verfüllt. Im Bereich der Ecke 6 wird in dem Dichtungsprofil 18 ein weiterer Gehrungsschnitt 8 durchgeführt, dessen Schnittkanten ebenfalls mittels des schnell abbindenden Klebers miteinander verbunden werden. Bei Herstellung des Gehrungsschnittes 8 wird der in dem bzw. am Nutabschnitt 20 befindliche Dichtungsprofilabschnitt gespannt. In die Ecke 6 wird der Gehrungsschnitt 8 und in den Rest des Nutabschnittes 20 wird das Dichtungsprofil 18 in die Nut 15 eingedrückt.

Nach Herstellung der Eckverbindung im Bereich der Ecke 6 erfolgt in gleicher Weise im Bereich der Ecke 9 ein Gehrungsschnitt 10 in dem Dichtungsprofil, wobei der Nutabschnitt 21 mit dem Dichtungsprofil 18 teilweise verfüllt ist. Die Schnittkanten des Gehrungsschnitts 10 werden ebenfalls durch Klebung miteinander verbunden. Die gleiche Vorgehensweise erfolgt im Bereich des Nutabschnitts 22, bei dem nach Einlegen des Dichtungsprofils 18 im Bereich der Ecke 11 ein Gehrungsschnitt 12 durchgeführt und die Klebverbindung hergestellt wird. Für den Nutabschnitt 19 wird das Dichtungsprofil 18 von der Dichtungsprofilrolle 2 so getrennt, daß der freie Endabschnitt 14 mittels einer Klebschicht 23 mit dem bereits in den Nutabschnitt 19 befindlichen Endabschnitt 3 des Dichtungsprofils 18 verbunden werden kann. Auch für die Verbindung der Endabschnitte 3, 14 des Dichtungsprofils 18 wird ein schnell abbindender Kleber verwendet. Hierdurch ist es möglich, in einem Arbeitsgang einen Dichtungsrahmen 17 herzustellen, der nach Fertigstellung bereits in die entsprechende Nut 15 des Rahmens 1 eingesetzt ist.

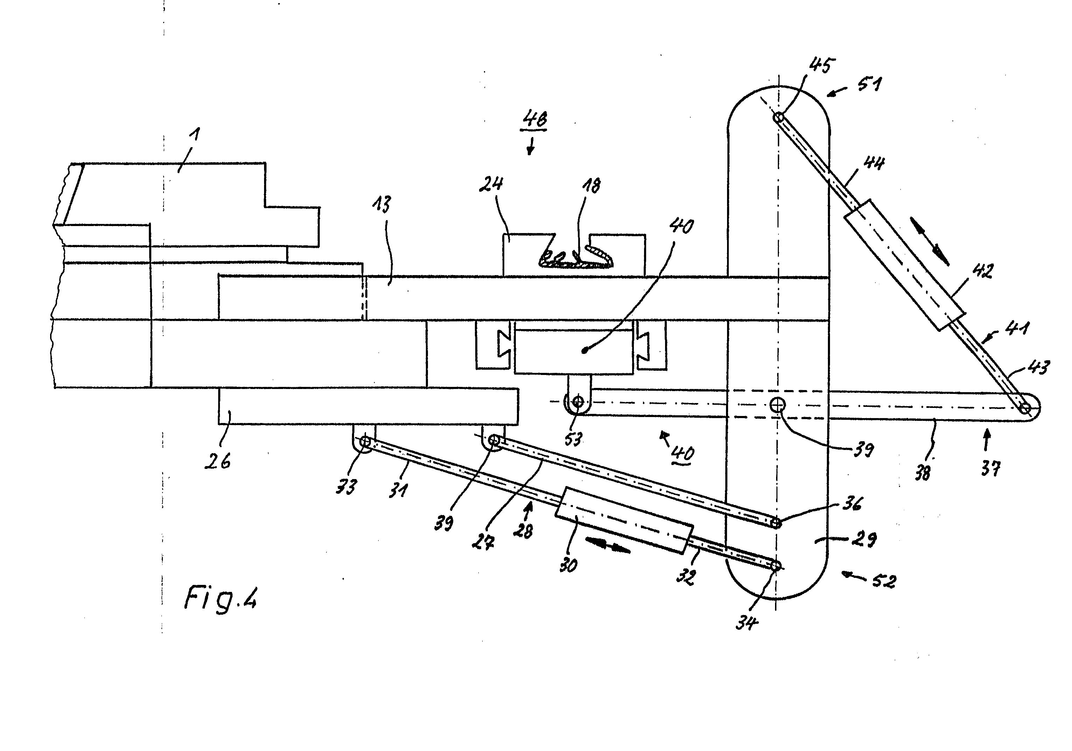

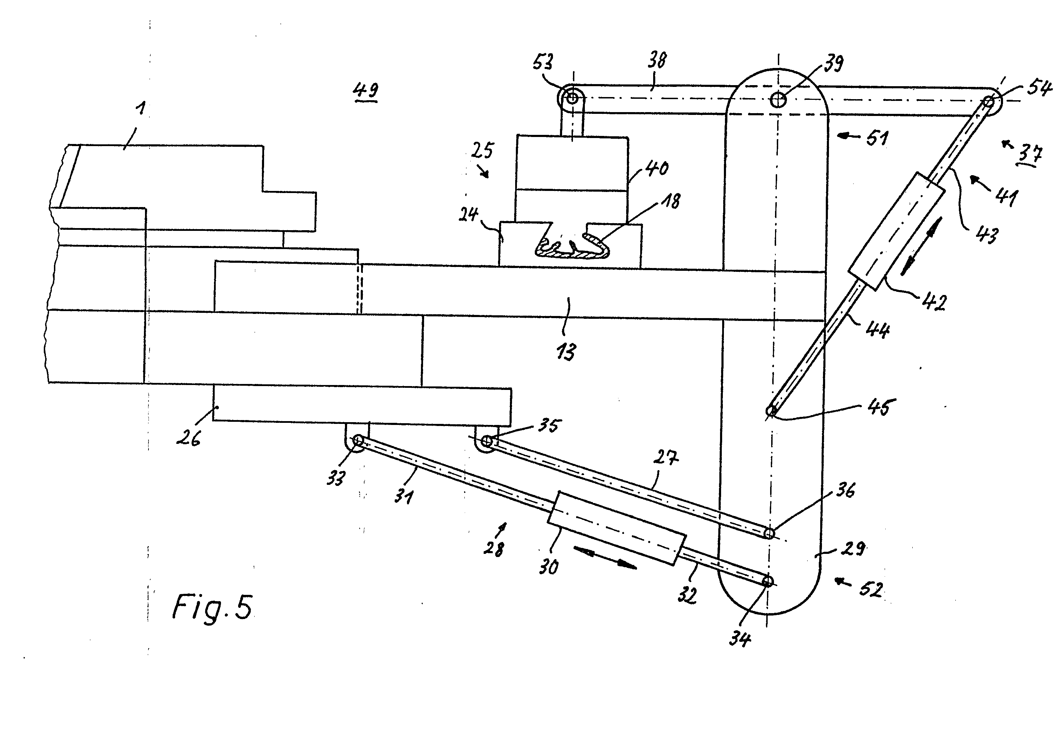

In den Fig. 4 und 5 sind Ausführungsformen der Vorrichtung 48, 49 schematisch dargestellt. Die Vorrichtung 48, 49 besteht aus einer am Rahmen 1 festklemmbaren Grundplatte 13, auf der ein Profilstück 24 zur Lagerung des Dichtungsprofils 18 und eine dem Profilstück 24 zugeordnete Schneideinheit 25 angeordnet ist. Mittels der Schneideinheit 25 werden die Gehrungsschnitte 5, 8, 10, 12 ausgebildet. Die Grundplatte 13 ist mittels einer Klemmplatte 26 an dem Rahmen lösbar festklemmbar. Hierzu ist die Klemmplatte 26 mittels Führungsstangen 27, 28 mit einer an der Grundplatte 13 angeordneten Traverse 29 gelenkig verbunden. Die Führungsstange 28 besteht aus zwei Führungsstangenabschnitten 31, 32. Der eine Endabschnitt des Führungsstangenabschnitts 31 ist mittels eines Gelenks 33 an der Klemmplatte 26 gelenkig befestigt. Der Führungsstangenabschnitt 32 ist mittels seines einen Endabschnitts an einem Gelenk 34 der Traverse 29 gelenkig befestigt. Die Führungsstange 27 ist ebenfalls mittels Gelenken 35, 36 mit der Klemmplatte 26 bzw. der Traverse 29 verbunden. Die den Gelenken 33, 34 abgewandten Endabschnitte der Führungsstangenabschnitte 31, 32 stehen mit einer Stelleinrichtung 30 in Wirkverbindung. Die Stelleinrichtung 30 kann als hydraulischer oder pneumatischer Zylinder mit einem beidseitig mit Druck beaufschlagbaren Kolben ausgebildet sein. In diesem Fall sind die Führungsstangenabschnitte 31, 32 mit dem Kolben verbunden.

Die Schneideinheit 25 kann oberhalb oder unterhalb der Grundplatte 13 angeordnet sein. Auf der Grundplatte 13 ist ein Profilstück 24 angeordnet, das eine Nut zur Aufnahme des Dichtungsprofils 18 aufweist. Die Schneideinheit 25 des Schneidkopfs 40 kann mittels eines mit der Traverse 29 verbundenen Stellantriebs 37 so betätig werden, daß ein Wirkeingriff auf das in dem Profilstück 24 befindliche Dichtungsprofil 18 erfolgt. Der Stellantrieb 37 besteht aus einem zweiarmigen Hebel 38, der an der Traverse 29 mittels eines Gelenks 39 vertikal schwenkbar gelagert ist. Der eine Endabschnitt des Hebels 38 ist mittels eines Gelenks 53 mit dem Schneidkopf 40 verbunden. Der andere Endabschnitt des Hebels 38 ist mittels eines Gelenks 54 mit einer Stellstange 41 verbunden, die an einem Gelenk 45 an der Traverse 29 schwenkbar befestigt ist. Die Stellstange 41 ist mittels eines Stellglieds 42 axial verschieblich ausgebildet. Das Stellglied 42 kann als hydraulisch oder pneumatisch betätigbarer Zylinder ausgebildet sein, der einen wechselweise beidseitig mit Druck beaufschlagbaren Kolben aufweist oder durch Federzug in die Ausgangsstellung zurückgeholt wird. Dieser Kolben ist mit den Stellstangenabschnitten 43, 44 verbunden, so daß bei einer Verschiebung des Kolbens der Hebel 38 um das Gelenk 39 geschwenkt wird. Bei der Vorrichtung 48 befindet sich das Gelenk 45 der Stellstange 41 am oberen Endabschnitt 51 der Traverse 29 während das Gelenk 39 des Hebels 38 am unteren Endabschnitt 52 der Traverse 29 unterhalb

0156037

der Grundplatte 13 angeordnet ist. Bei der Vorrichtung 49 ist der Hebel 38 am oberen Endabschnitt 51 der Traverse angeordnet, während das Gelenk 45 der Stellstange 41 unterhalb der Grundplatte 13 am unteren Endabschnitt 25 der Traverse 29 angeordnet ist.

Das Profilstück 24 ermöglicht das Mitführen des Dichtungsprofils 18, bei dessen Einführen in die Nutabschnitte 19, 20, 21, 22, so daß ein sich wiederholendes Einfädeln des Dichtungsprofils 18 zur Durchführung der Gehrungsschnitte vermieden wird.

0156037

P A T E N T A N S P R Ü C H E

1. Verfahren zur Herstellung von einstückigen Dichtungsrahmen für Fenster, Türen od. dgl. aus einem dauerelastischen gummiartigen im Querschnitt profilierten
strangartigen Dichtungsprofil, dadurch gekennzeichnet, daß von einer Rolle eines Dichtungsprofils der
äußere Abschnitt des freien Endes in einen Teil eines
Nutabschnitts der umlaufenden Nut des Rahmens oder
Flügels eingelegt, dann im Bereich der einen Ecke der
Nut in dem Dichtungsprofil ohne dieses zu durchtrennen ein Gehrungsschnitt ausgebildet und die Schnittseiten miteinander verbunden werden, dann das
Dichtungsprofil in sich wiederholender Folge in den
jeweils folgenden Nutabschnitt eingelegt und in dem
Eckbereich nach Durchführung eines Gehrungsschnitts
ohne Durchtrennung des Dichtungsprofils miteinander
verklebt und nach Verfüllen der Nut mit dem Dichtungsprofil dieses durchtrennt und der freie Endabschnitt mit dem bereits in dem Nutabschnitt befindlichen Endabschnitt des Dichtungsprofils durch Kleben
verbunden wird.

2. Verfahren nach Anspruch 1, dadurch gekennzeichnet,
daß bei Ausbildung der Gehrungsschnitte die Vorspannung berücksichtigt und der Dichtungsprofilstreifen vor dem Verkleben der Schnittflächen der Gehrungsschnitte gespannt in die Nutabschnitte eingelegt wird.

3. Verfahren nach Anspruch 1 und 2, dadurch gekennzeichnet, daß als Kleber ein schnellabbindender Kleber wie
Cyanit-Kleber Lösungsmittelkleber od. dgl. verwendet
wird.

4. Vorrichtung zur Durchführung des Verfahrens nach Anspruch
1 bis 3, gekennzeichnet durch eine an einem Rahmen (1)
eines Fenster-oder Türflügels festklemmbare Grundplatte (13), auf der ein Profilstück (24) zur Lagerung des Dichtungsprofils (18) und eine dem Profilstück (24) zugeordnete Schneideinheit (25) angeordnet ist, mittels derer ein Gehrungsschnitt (5, 8, 10, 12) ausbildbar ist.

5. Vorrichtung nach Anspruch 4, dadurch gekennzeichnet, daß die Grundplatte (13) mittels einer Klemmplatte (26) an dem Rahmen (1) lösbar festklemmbar ist, die mittels Führungsstangen (27, 28) mit einer an der Grundplatte (13) angeordneten Traverse (29) gelenkig verbunden sind.

6. Vorrichtung nach Anspruch 5, dadurch gekennzeichnet, daß die Klemmplatte (26) mittels einer mit einer der Führungsstangen (27, 28) verbundenen Stelleinrichtung (30) betätigbar ist.

7. Vorrichtung nach Anspruch 6, dadurch gekennzeichnet, daß die mit der Stelleinrichtung (30) verbundene Führungsstange (27, 28) axial verschieblich ist.

8. Vorrichtung nach Anspruch 6 und 7, dadurch gekennzeichnet, daß die Stelleinrichtung (30) als hydraulischer oder pneumatischer Zylinder mit einem beidseitig mit Druck beaufschlagbaren Kolben oder mechanisch mit einem Kniehebel od. dgl. ausgebildet ist.

9. Vorrichtung nach Anspruch 8, dadurch gekennzeichnet, daß der Kolben mit Führungsstangenabschnitten (31, 32) verbunden ist, die mittels Gelenken (33, 34) an der Klemmplatte (26) und der Traverse (29) befestigt sind.

0156037

10. Vorrichtung nach Anspruch 4 und 5, dadurch gekennzeichnet, daß die Schneideinheit (25) mittels eines mit der Traverse (29) verbundenen Stellantriebs (37) betätigbar ist.

11. Vorrichtung nach Anspruch 4 bis 10, dadurch gekennzeichnet, daß der Schneidkopf (40) der Schneideinheit (25) mittels eines mit der Traverse (29) verbundenen Stellantriebs (37) betätigbar ist.

12. Vorrichtung nach Anspruch 11, dadurch gekennzeichnet, daß der Schneidkopf (40) mittels eines zweiarmigen Hebels (38) an der Traverse (29) vertikal verschieblich gelagert ist, der mittels einer an der Travers (29) befestigten Stellstange (41) betätigbar ist.

13. Vorrichtung nach Anspruch 12, dadurch gekennzeichnet, daß die Stellstange (41) aus zwei mittels einer Stelleinrichtung (42) betätigbaren Stellstangenabschnitten (43, 44) besteht.

14. Vorrichtung nach Anspruch 13, dadurch gekennzeichnet, daß die Stellstangenabschnitte (33, 34) mittels einer als hydraulisch oder pneumatisch betätigbaren Zylinders ausgebildeten Stelleinrichtung (42) betätigbar sind.

15. Vorrichtung nach Anspruch 4 bis 14, dadurch gekennzeichnet, daß die Schneideinheit (25) je nach Größe des Fensters zu den Ecken (4, 6, 9, 11) zum Zuschnittspunkt um mindestens 3% versetzt mittels einer Feineinstellvorrichtung (7) mit der Grundplatte (13) verbunden ist.

Fig.1

Fig.2

Fig.3

Fig.4

Fig.5